# EUROPEAN PATENT APPLICATION

(11) **EP 3 876 654 A1**
(43) Date of publication of application: **08.09.2021**
(21) Application number: 19878454.8
(22) Date of filing: 14.10.2019
(51) Int. Cl.: H04W 74/08, H04W 72/12

(54) **UPLINK TRANSMISSION METHOD AND DEVICE, COMPUTER READABLE STORAGE MEDIUM AND TERMINAL**

(30) Priority: 31.10.2018 CN 201811287103
(71) Applicant: Spreadtrum Communications (Shanghai) Co., Ltd., Shanghai 201203 (CN)
(72) Inventor: WANG, Tingting, Shanghai 201203 (CN)
(74) Representative: Nordmeyer, Philipp Werner
(86) International application number: PCT/CN2019/110943
(87) International publication number: WO 2020/088226

(57) **Abstract**

An uplink transmission method and device, a computer readable storage medium and a terminal. Said method comprises: when an uplink process is started, starting a corresponding timer; and when the timing duration of the timer has reached a preset timing duration and the uplink process is still unsuccessful, terminating the uplink process and triggering other processes. Said method is able to be used for uplink transmission when the LBT fails multiple times. Furthermore, triggering other processes while terminating the uplink process is able to shorten the duration of the uplink process, avoiding the increase of the delay of the uplink process.

## Description

### CROSS-REFERENCE TO RELATED APPLICATIONS

This application claims the benefit of priority to Chinese Patent Application No. 201811287103.5, filed on October 31, 2018, and entitled "UPLINK TRANSMISSION METHOD AND DEVICE, COMPUTER READABLE STORAGE MEDIUM AND TERMINAL", the entire disclosure of which is incorporated herein by reference.

### TECHNICAL FIELD

The present disclosure generally relates to communication technology field, and more particularly, to an uplink transmission method and device, a computer readable storage medium and a terminal.

### BACKGROUND

For the use of unlicensed spectrums, different countries have different regulations. In the European market, unlicensed spectrums must be used in a way of Listen-Before-Talk (LBT). A channel can be accessed only when it is detected to be idle through an LBT procedure.

Specifically, the LBT procedure includes following steps. A User Equipment (UE) performs a Clear Channel Assessment (CCA) before transmitting data or signaling. If an assessment result is that the channel is idle, it means that the LBT is successful, and the data or signaling can be transmitted immediately; otherwise, it means that the LBT fails, and data cannot be transmitted until a next fixed frame period.

A fixed frame consists of a Channel Occupancy Time (COT) and an idle period. The COT is between 1ms and 10ms, and a smallest idle period is 5% of the COT.

In practice, LBT may fail multiple times. However, exiting techniques haven't provided a solution for how to perform uplink transmission in this case.

### SUMMARY

Embodiments of the present disclosure provide solutions for how to perform uplink transmission when LBT fails multiple times.

In an embodiment of the present disclosure, an uplink transmission method is provided, including: when an uplink procedure starts, starting a corresponding timer; and when a timing duration of the timer has reached a preset timing duration, and the uplink procedure is unsuccessful, terminating the uplink procedure and triggering another procedure.

Optionally, the uplink procedure is a random access procedure.

Optionally, when an uplink procedure starts, starting a corresponding timer includes: when a random access preamble to be transmitted is determined, or when a medium access control layer of a belonging terminal delivers the random access preamble to a physical layer of the terminal, starting a first timer corresponding to the random access procedure.

Optionally, the uplink procedure being unsuccessful when a timing duration of the timer has reached a preset timing duration includes any one of the following: a random access response message having not been received within a first preset duration; a conflict resolution message having not been received within a second preset duration; or the conflict resolution message having been received within the second preset duration, but conflict detection failing.

Optionally, the another procedure includes a radio link failure event.

Optionally, the uplink transmission method further includes: when the timing duration of the timer does not reach the preset timing duration, and the uplink procedure is unsuccessful, continuing the uplink procedure.

Optionally, the uplink procedure is a scheduling request procedure.

Optionally, when an uplink procedure starts, starting a corresponding timer includes: when a belonging terminal transmits a scheduling request for the first time, starting a second timer corresponding to the scheduling request procedure.

Optionally, when a timing duration of the timer has reached a preset timing duration, and the uplink procedure is unsuccessful, terminating the uplink procedure and triggering another procedure includes: before the number of transmitting scheduling requests reaches a preset maximum number of times, when a timing duration of the second timer has reached the preset timing duration, and the scheduling request procedure is unsuccessful, terminating the scheduling request procedure and triggering another procedure.

Optionally, the another procedure includes a random access procedure.

Optionally, a dedicated message or a public message is used by a network side to transmit configuration information of the timer to a terminal.

Optionally, the configuration information of the timer is configured by the network side based on a type of random access or a type of event that triggers the random access.

Optionally, the configuration information of the timer is configured by the network side based on configuration of different scheduling requests.

In an embodiment of the present disclosure, an uplink transmission device, is provided, including: a timing circuitry configured to: when an uplink procedure starts, start a corresponding timer; and a first processing circuitry configured to: when a timing duration of the timer has reached a preset timing duration, and the uplink procedure is unsuccessful, terminate the uplink procedure and trigger another procedure.

Optionally, the uplink procedure is a random access procedure.

Optionally, the timing circuitry is configured to: when a random access preamble to be transmitted is determined, or when a medium access control layer of a belonging terminal delivers the random access preamble to a physical layer of the terminal, start a first timer corresponding to the random access procedure.

Optionally, the uplink procedure being unsuccessful when a timing duration of the timer has reached a preset timing duration includes any one of the following: a random access response message having not been received within a first preset duration; a conflict resolution message having not been received within a second preset duration; or the conflict resolution message having been received within the second preset duration, but conflict detection failing.

Optionally, the first processing circuitry is configured to: when the timing duration of the timer has reached the preset timing duration, and the uplink procedure is unsuccessful, terminate the uplink procedure and trigger a radio link failure event.

Optionally, the uplink transmission device further includes a second processing circuitry configured to: when the timing duration of the timer does not reach the preset timing duration, and the uplink procedure is unsuccessful, continue the uplink procedure.

Optionally, the uplink procedure is a scheduling request procedure.

Optionally, the timing circuitry is configured to: when a belonging terminal transmits a scheduling request for the first time, start a second timer corresponding to the scheduling request procedure.

Optionally, the first processing circuitry is configured to: before the number of transmitting scheduling requests reaches a preset maximum number of times, when a timing duration of the second timer has reached the preset timing duration, and the scheduling request procedure is unsuccessful, terminate the scheduling request procedure and trigger another procedure.

Optionally, the another procedure includes a random access procedure.

Optionally, a dedicated message or a public message is used by a network side to transmit configuration information of the timer.

Optionally, the configuration information of the timer is configured by the network side based on a type of random access or a type of event that triggers the random access.

Optionally, the configuration information of the timer is configured by the network side based on configuration of different scheduling requests.

Optionally, the uplink transmission device is integrated in a base station or a terminal.

In an embodiment of the present disclosure, a computer readable storage medium having computer instructions stored therein is provided, wherein when the computer instructions are executed, any one of the above methods is performed.

In an embodiment of the present disclosure, a terminal including a memory and a processor is provided, wherein the memory has computer instructions stored therein, and when the processor executes the computer instructions, any one of the above methods is performed.

Embodiments of the present disclosure may provide following advantages.

In embodiments of the present disclosure, when an uplink procedure starts, a corresponding timer is started. If a timing duration of the timer has reached a preset timing duration, while the uplink procedure is unsuccessful for any reasons, the uplink procedure is terminated, thereby uplink transmission can be performed when LBT fails multiple times. Besides, another procedure is triggered when the uplink procedure is terminated, which may shorten a duration of the uplink procedure, and avoid the increase of delay of the uplink procedure.

### BRIEF DESCRIPTION OF THE DRAWINGS

Figure 1 is a flow chart of an uplink transmission method according to an embodiment;
Figure 2 is a signaling interaction diagram of a random access procedure according to an embodiment;
Figure 3 is a transmission diagram of a scheduling request procedure according to an embodiment;
Figure 4 is a transmission diagram of a scheduling request procedure according to an embodiment; and
Figure 5 is a structural diagram of an uplink transmission device according to an embodiment.

### DETAILED DESCRIPTION

Exiting techniques haven't provided a solution for how to perform uplink transmission when LBT fails multiple times.

In embodiments of the present disclosure, an uplink transmission method is provided. When an uplink procedure starts, a timer correspondingly configured is started. If a timing duration of the timer has reached a preset timing duration, while the uplink procedure is unsuccessful for any reasons, the uplink procedure is terminated, thereby uplink transmission can be performed when LBT fails multiple times. Besides, another procedure is triggered when the uplink procedure is terminated, which may shorten a duration of the uplink procedure, and avoid the increase of delay of the uplink procedure.

In order to clarify the objects, characteristics and advantages of the disclosure, embodiments of present disclosure will be described in detail in conjunction with accompanying drawings.

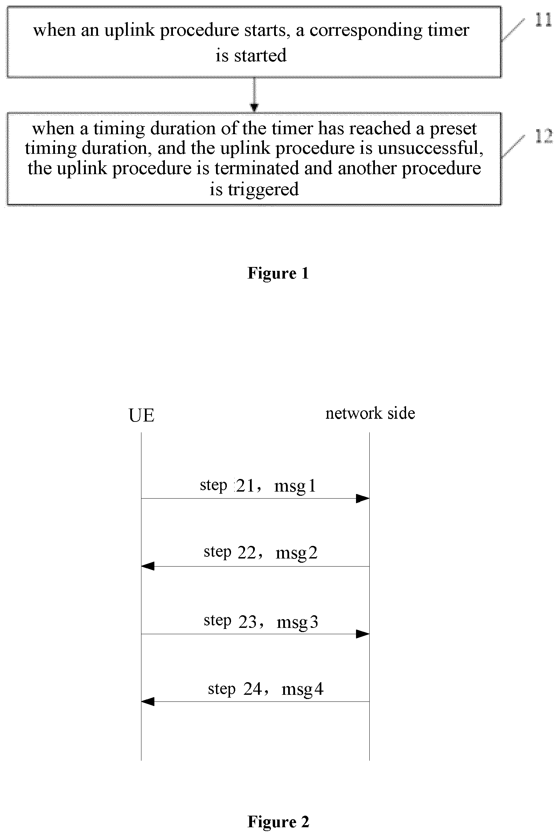

Figure 1 is a flow chart of an uplink transmission method according to an embodiment. Referring to Figure 1, the method may include S11 and S12.

In S11, when an uplink procedure starts, a corresponding timer is started.

In some embodiments, the uplink procedure may merely include at least one uplink data or signaling transmission process, or further include at least one downlink data or information reception process, which is not specifically limited.

For example, the uplink procedure may be a data packet transmission process.

For another example, the uplink procedure may be a random access procedure, wherein the random access procedure includes not only two signaling transmission processes, but also two signaling reception processes.

For another example, the uplink procedure may be a Scheduling Request (SR) procedure. Generally, an SR procedure may include multiple signaling transmission processes.

It could be understood that no matter what kind of procedure the uplink procedure is, the present disclosure is not limited thereto, and all are within the scope of the present disclosure.

In some embodiments, a network side (for example, various types of base stations, relay stations, etc.) may configure timers corresponding to different uplink procedures for a UE. The network side may configure a corresponding timer for merely one uplink procedure, or configure corresponding timers for multiple uplink procedures, which is specifically set by those skilled in the art based on practical requirements.

In some embodiments, the network side may use a dedicated message or a public message to transmit configuration information of the timer. The dedicated message may be a Radio Resource Control (RRC) reconfiguration message or a handover command message. The public message may be system information. The configuration information of the timer includes, but is not limited to, length information of the timer.

Taking the uplink procedure being a random access procedure as an example, the network side may configure different configuration information for different timers, for example, configure a first timer timer x with different lengths, based on different types of random access or different types of events that trigger the random access.

Taking the uplink procedure being an SR procedure as an example, the network side may configure different configuration information for different timers, for example, configure a second timer timer y with different lengths for the UE, based on different SR configuration. For example, when the SR configuration is 1, the second timer timer y with a length of 20 ms is configured for the UE.

In S12, when a timing duration of the timer has reached a preset timing duration, and the uplink procedure is unsuccessful, the uplink procedure is terminated and another procedure is triggered.

In some embodiments, when the timing duration of the timer has reached the preset timing duration, the uplink procedure may be successful or unsuccessful. For example, when the uplink procedure is a random access procedure, the uplink procedure being successful means that a conflict resolution message is received from the network side, and conflict detection is successful, that is, the random access is successful. When the uplink procedure is an SR procedure, the uplink procedure being successful means that a grant message is received from the network side.

In some embodiments, when the timing duration of the timer has reached the preset timing duration, and the uplink procedure is still unsuccessful, the uplink procedure is terminated. There may be multiple reasons for the failure of the uplink procedure, for example, multiple LBT failures. While terminating the uplink procedure, another procedure is triggered to prevent the uplink procedure from lasting too long and causing extra time delay.

The another procedure may be a radio link failure event, or a random access procedure, which may be set by those skilled in the art based on practical transmission requirements, and is not specifically limited.

In some embodiments, the uplink transmission method in the embodiments of the present disclosure may be performed by the UE or the base station.

Specifically, the UE may start the corresponding timer when the uplink procedure is started, and then terminate the uplink procedure and trigger another procedure when the timing duration of the timer has reached the preset timing duration and the uplink procedure is still unsuccessful.

It could be understood that no matter what the specific execution subject is, the present disclosure is not limited thereto, and all fall within the scope of the present disclosure.

Taking the method being performed by the UE, and the uplink procedure being the random access procedure and the SR procedure respectively as an example, the uplink transmission method in the embodiments of the present disclosure is described in detail below.

When the uplink procedure is a random access procedure, the uplink procedure may be started when a random access preamble to be transmitted is determined, or when a medium access control layer of a belonging terminal delivers the random access preamble to a physical layer of the terminal. The UE may start the first timer timer x corresponding to the random access procedure at a start time of the random access procedure. Length of the first timer timer x may be 10 ms.

In some embodiments, referring to Figure 2, the random access procedure may include S21, S22, S23 and S24.

In S21, a UE transmits msg1 to a network side, wherein msg1 is a random access preamble.

In 22, the UE receives msg2 from the network side, wherein msg2 is a random access response message.

msg2 corresponds to the random access preamble sent by msg1 and a time-frequency resource transmitted by the random access preamble. After transmitting msgl, the terminal may start a timer ra-ResponseWindow to receive msg2. A timing duration of the timer ra-ResponseWindow is a first preset duration.

In 23, the UE transmits msg3 to the network side, wherein msg3 is a connection establishment request message.

If the UE successfully receives msg2, the UE transmits msg3 according to grant information in msg2. After transmission of msg3 is completed, the UE starts a timer ra-ContentionResolutionTimer and waits to receive msg4. A timing duration of the timer ra-ContentionResolutionTimer is a second preset duration.

In 24, the UE receives msg4 from the network side, wherein msg4 is a conflict resolution message.

After receiving msg4, the UE may perform conflict detection. The conflict detection includes the UE verifying whether conflict resolution identity information contained in msg4 is consistent with conflict resolution identity information carried by the UE in msg3. If they are inconsistent, it is considered that the conflict detection fails, and if they are consistent, it is considered that the conflict detection succeeds.

During the random access procedure, there may be multiple reasons causing the random access procedure to be still unsuccessful when the timing duration of the first timer timer x has reached the preset timing duration.

For example, when 22 is performed, msg2 may not be received within a first preset duration, that is, when the timer ra-ResponseWindow expires and msg2 is not received, the random access procedure fails.

For another example, when 24 is performed, although msg2 is received within the first preset duration, msg2 does not correspond to the transmitted msgl, that is, msg2 does not correspond to the random access preamble of msg1 and a time-frequency resource transmitted by the random access preamble. Therefore, the terminal determines that the received msg2 does not correspond to the msg1 transmitted by the terminal. In this case, the random access procedure still fails.

For another example, when 24 is performed, msg4 may not be received within a second preset duration, that is, when the timer ra-ContentionResolutionTimer expires and msg4 is not received, the random access procedure fails.

For another example, when 24 is performed, although msg4 is received within the second preset duration, the collision detection fails. In this case, the random access procedure still fails.

In some embodiments, if the random access procedure is unsuccessful for any reasons when the timing duration of the first timer timer x has reached the preset timing duration, it is determined that the random access procedure fails. In this case, a Media Access Control (MAC) layer of the UE may indicate a random access problem to an upper layer (for example, an RRC layer). After receiving indication of the random access problem, the RRC layer of the UE triggers a Radio Link Failure (RLF) event. Under a condition that an access layer security mode is activated, the RLF event may trigger an RRC link re-establishment procedure.

In some embodiments, when the timing duration of the timer does not reach the preset timing duration, and the uplink procedure is unsuccessful, the uplink procedure is continued, that is, 21 to 24 are re-executed until the random access is successful. Alternatively, if the random access is still unsuccessful when the timing duration of the timer has reached the preset timing duration, it is determined that the random access procedure fails.

In some embodiments, the uplink transmission method may be used in a contention-based random access procedure or a non-contention-based random access procedure. The contention-based random access refers to a procedure in which random access resources are shared by multiple UEs, and the UE selects a random access resource from common random access resources for random access. The non-contention-based random access refers to a procedure in which the UE uses a dedicated random access resource for random access.

By setting the timer, when the timer expires, the MAC layer indicates the random access problem to the upper layer to trigger the RLF event, and then the RRC link re-establishment is triggered, which may avoid a too long duration of the random access and reduce delay.

When the uplink procedure is an SR procedure, the SR procedure is started when the UE transmits an SR for the first time. The UE may start a second timer timer y corresponding to the SR procedure when transmitting the SR for the first time.

The entire SR procedure may include following steps. A MAC layer of the UE adds 1 to a counter SR_COUNTER of the number of times the SR is transmitted, and delivers the SR to a physical layer. If the UE does not receive grant information from the network side, the UE continues to transmit the SR until the UE receives the grant information from the network side. When the UE receives the grant information from the network side, the SR procedure is successful. The transmission of the SR may be periodic, and the period is configured by the network side.

In some embodiments, before the number of times of transmitting SR reaches a preset maximum number SR-TransMax, if a timing duration of the second timer timer y has reached a preset timing duration, and the SR procedure is still unsuccessful, the SR procedure is terminated and another procedure is triggered. If the timing duration of the second timer timer y does not reach the preset timing duration, and the SR procedure is unsuccessful, the UE continues to transmit the SR until the SR procedure succeeds, or until the timing duration of the second timer timer y has reached the preset timing duration and the SR procedure is still unsuccessful, thereby triggering another procedure.

In some embodiments, when the number of times of transmitting SR reaches the preset maximum number SR-TransMax, even if the timing duration of the second timer timer y does not reach the preset timing duration, the SR procedure should be terminated and another procedure is triggered.

In some embodiments, when the SR procedure is terminated, the another triggered procedure may be a random access procedure.

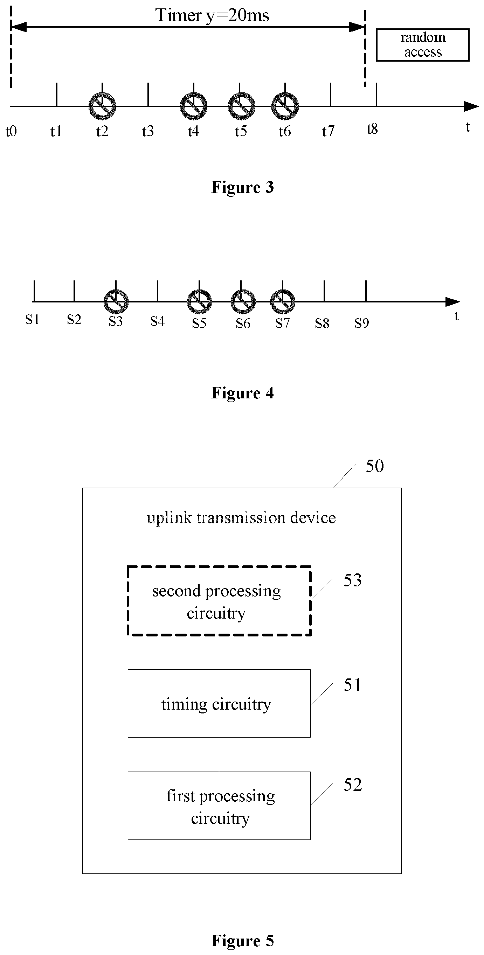

As shown in Figure 3, in configuration of the SR, the second timer timer y=20ms, and the preset maximum number of times SR-transmax=9. The SR counter SR-count is counted, i.e., increased by 1, merely when the SR is successfully transmitted, such as at t0, t1, t3, t7 and t8. If LBT fails, such as at t2, t4, t5 and t6, the SR counter is not increased by 1. When the UE transmits the SR for the first time and the SR counter SR-count=1, the UE starts the second timer timer y. Each time the SR is transmitted successfully, the SR counter SR-count is counted, i.e., increased by 1. When preparing to transmit the SR for the fifth time, if the second timer timer y expires, the UE does not transmit the SR, but triggers a random access procedure.

When the timing duration of the second timer has reached the preset timing duration, and the SR procedure is still unsuccessful, the uplink procedure is terminated and the random access procedure is initiated in time, which may effectively avoid a delay of the SR procedure due to LBT failure.

In the embodiments of the present disclosure, the above-mentioned uplink transmission method is not only applicable to the fifth generation mobile communication (5G) system, but also applicable to communication systems such as 4G and 3G, and also applicable to various communication systems that will be evolved in the future, such as 6G, 7G and etc.

It could be seen from above that using the uplink transmission method in the embodiments of the present disclosure, the corresponding timer is started when the uplink procedure is started, and the uplink procedure is terminated as long as the timing duration of the timer reaches the preset timing duration, thereby realizing uplink transmission when LBT fails multiple times.

In some embodiments, the network side may configure at least one of following counters for different SR: a counter for the number of attempts to transmit SR; a counter for the number of consecutive LBT failures; or a counter for the number of successful transmissions of SR.

The network side may configure a maximum number of attempts to transmit SR as max x. The number of attempts to transmit SR refers to the number of times a MAC layer scheduling request is transmitted to a physical layer, and the number does not indicate whether the physical layer finally transmits the SR successfully. When the number of attempts to transmit SR reaches the maximum max x, the UE triggers a random access procedure.

The network side may configure a maximum number of consecutive LBT failures as max y. When the number of consecutive LBT failures reaches the maximum number of max y, the UE triggers a radio link failure event.

The network side may configure a maximum number of successful transmission of SR as SR-transmax. When the number of successful transmission of SR reaches the maximum number of successful transmission of SR, the UE triggers the random access procedure.

In some embodiments, the network side may configure the above counter for the UE in a dedicated message or a public message. The dedicated message may be an RRC reconfiguration message or a handover command message. The public message may be system information.

In some embodiments, the network side may configure the aforementioned counter with different values for the UE based on different configuration of SR.

A procedure of the UE transmitting SR may be as follows.

The terminal transmits an SR to the network side at an SR transmission occasion. Specifically, the MAC layer of the UE adds 1 to the number of attempts to transmit SR and delivers the SR to the physical layer. If the physical layer transmits the SR successfully, the UE adds 1 to the number of successful transmissions of SR. When the physical layer transmits the SR, if LBT fails, the number of LBT failures is increased by 1.

Take Figure 4 as an example. A maximum value max x of the counter of the number of attempts to transmit SR is 9, a maximum number max y of consecutive LBT failures is 3, and a maximum number SR-transmax of successful transmissions of SR is 4.

At S1, the MAC layer of the UE transmits an SR to the physical layer, and the physical layer succeeds in transmission, the the counter for the number of attempts to transmit SR is increased by 1, and the counter for the number of successful SR transmissions is increased by 1. At S3, the MAC layer transmits the SR to the physical layer, but the physical layer fails to transmit the SR due to a failure of LBT, then the counter for the number of attempts to transmit SR is increased by 1, the counter for the number of successful SR transmissions remains unchanged, and the counter of the number of LBT failures is increased by 1.

If the number of consecutive failures of LBT reaches 3, that is, from S5 to S7, the terminal triggers RLF.

If the number of attempts to transmit SR reaches 9, that is, S9, the terminal triggers a random access procedure.

If the number of successful transmissions of SR reaches 4, that is, S8, the terminal triggers a random access procedure.

By introducing different counters, the RLF is triggered when LBT fails continuously, and the terminal is triggered to perform the random access procedure if LBT does not fail continuously. If the number of attempts to transmit SR reaches the maximum number, random access may be triggered, thereby reducing delay. If the number of successful SR transmissions reaches the maximum number, random access may also be triggered.

In order to enable those skilled in the art to better understand and implement the present disclosure, a device and a computer readable storage medium corresponding to the above method are described in detail below.

Figure 5 is a structural diagram of an uplink transmission device 50 according to an embodiment. Referring to Figure 5, the device 50 may include a timing circuitry 51 and a first processing circuitry 52.

The timing circuitry 51 is configured to: when an uplink procedure starts, start a corresponding timer; and the first processing circuitry 52 is configured to: when a timing duration of the timer has reached a preset timing duration, and the uplink procedure is unsuccessful, terminate the uplink procedure and trigger another procedure.

In some embodiments, the uplink procedure is a random access procedure.

In some embodiments, the timing circuitry 51 is configured to: when a random access preamble to be transmitted is determined, or when a medium access control layer of a belonging terminal delivers the random access preamble to a physical layer of the terminal, start a first timer corresponding to the random access procedure.

In some embodiments, the uplink procedure being unsuccessful when a timing duration of the timer has reached a preset timing duration includes any one of the following: a random access response message having not been received within a first preset duration; a conflict resolution message having not been received within a second preset duration; the random access response message having been received within the first preset duration, but it being not corresponding to msg1 being transmitted (random access preamble); or the conflict resolution message having been received within the second preset duration, but conflict detection failing.

In some embodiments, the first processing circuitry 52 is configured to: when the timing duration of the timer has reached the preset timing duration, and the uplink procedure is unsuccessful, terminate the uplink procedure and trigger a radio link failure event.

In some embodiments, the uplink transmission device 50 further includes a second processing circuitry 53 configured to: when the timing duration of the timer does not reach the preset timing duration, and the uplink procedure is unsuccessful, continue the uplink procedure.

In some embodiments, the uplink procedure is an SR procedure.

In some embodiments, the timing circuitry 51 is configured to: when a belonging terminal transmits an SR for the first time, start a second timer corresponding to the SR procedure.

In some embodiments, the first processing circuitry 52 is configured to: before the number of transmitting SRs reaches a preset maximum number of times, when a timing duration of the second timer has reached the preset timing duration, and the SR procedure is unsuccessful, terminate the SR procedure and trigger another procedure.

In some embodiments, the another procedure includes a random access procedure.

In some embodiments, a dedicated message or a public message is used by a network side to transmit configuration information of the timer.

In some embodiments, the configuration information of the timer is configured by the network side based on a type of random access or a type of event that triggers the random access.

In some embodiments, the configuration information of the timer is configured by the network side based on configuration of different SRs.

In some embodiments, the uplink transmission device is integrated in a base station or a terminal.

In an embodiment of the present disclosure, a computer readable storage medium having computer instructions stored therein is provided, wherein when the computer instructions are executed, any one of the above uplink transmission methods is performed.

In some embodiments, the computer readable storage medium may include a Read Only Memory (ROM), a Random Access Memory (RAM), a magnetic disk or an optical disk.

In an embodiment of the present disclosure, a terminal including a memory and a processor is provided, wherein the memory has computer instructions stored therein, and when the processor executes the computer instructions, any one of the above uplink transmission methods is performed.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. An uplink transmission method, comprising:
when an uplink procedure starts, starting a corresponding timer; and
when a timing duration of the timer has reached a preset timing duration, and the uplink procedure is unsuccessful, terminating the uplink procedure and triggering another procedure.

2. The uplink transmission method according to claim 1, wherein the uplink procedure is a random access procedure.

3. The uplink transmission method according to claim 2, wherein when an uplink procedure starts, starting a corresponding timer comprises:
when a random access preamble to be transmitted is determined, or when a medium access control layer of a belonging terminal delivers the random access preamble to a physical layer of the terminal, starting a first timer corresponding to the random access procedure.

4. The uplink transmission method according to claim 2, wherein the uplink procedure being unsuccessful when a timing duration of the timer has reached a preset timing duration comprises any one of the following:
a random access response message having not been received within a first preset duration;
a conflict resolution message having not been received within a second preset duration; or
the conflict resolution message having been received within the second preset duration, but conflict detection failing.

5. The uplink transmission method according to claim 2, wherein the another procedure comprises a radio link failure event.

6. The uplink transmission method according to claim 2, further comprising:
when the timing duration of the timer does not reach the preset timing duration, and the uplink procedure is unsuccessful, continuing the uplink procedure.

7. The uplink transmission method according to claim 1, wherein the uplink procedure is a scheduling request procedure.

8. The uplink transmission method according to claim 7, wherein when an uplink procedure starts, starting a corresponding timer comprises:
when a belonging terminal transmits a scheduling request for the first time, starting a second timer corresponding to the scheduling request procedure.

9. The uplink transmission method according to claim 8, wherein when a timing duration of the timer has reached a preset timing duration, and the uplink procedure is unsuccessful, terminating the uplink procedure and triggering another procedure comprises:
before the number of transmitting scheduling requests reaches a preset maximum number of times, when a timing duration of the second timer has reached the preset timing duration, and the scheduling request procedure is unsuccessful, terminating the scheduling request procedure and triggering another procedure.

10. The uplink transmission method according to claim 7, wherein the another procedure comprises a random access procedure.

11. The uplink transmission method according to claim 1, wherein a dedicated message or a public message is used by a network side to transmit configuration information of the timer to a terminal.

12. The uplink transmission method according to claim 11, wherein the configuration information of the timer is configured by the network side based on a type of random access or a type of event that triggers the random access.

13. The uplink transmission method according to claim 11, wherein the configuration information of the timer is configured by the network side based on configuration of different scheduling requests.

14. An uplink transmission device, comprising:
a timing circuitry configured to: when an uplink procedure starts, start a corresponding timer; and
a first processing circuitry configured to: when a timing duration of the timer has reached a preset timing duration, and the uplink procedure is unsuccessful, terminate the uplink procedure and trigger another procedure.

15. The uplink transmission device according to claim 14, wherein the uplink procedure is a random access procedure.

16. The uplink transmission device according to claim 15, wherein the timing circuitry is configured to:
when a random access preamble to be transmitted is determined, or when a medium access control layer of a belonging terminal delivers the random access preamble to a physical layer of the terminal, start a first timer corresponding to the random access procedure.

17. The uplink transmission device according to claim 15, wherein the uplink procedure being unsuccessful when a timing duration of the timer has reached a preset timing duration comprises any one of the following:
a random access response message having not been received within a first preset duration;
a conflict resolution message having not been received within a second preset duration; or
the conflict resolution message having been received within the second preset duration, but conflict detection failing.

18. The uplink transmission device according to claim 15, wherein the first processing circuitry is configured to: when the timing duration of the timer has reached the preset timing duration, and the uplink procedure is unsuccessful, terminate the uplink procedure and trigger a radio link failure event.

19. The uplink transmission device according to claim 15, further comprising a second processing circuitry configured to:
when the timing duration of the timer does not reach the preset timing duration, and the uplink procedure is unsuccessful, continue the uplink procedure.

20. The uplink transmission device according to claim 14, wherein the uplink procedure is a scheduling request procedure.

21. The uplink transmission device according to claim 20, wherein the timing circuitry is configured to:
when a belonging terminal transmits a scheduling request for the first time, start a second timer corresponding to the scheduling request procedure.

22. The uplink transmission device according to claim 21, wherein the first processing circuitry is configured to:
before the number of transmitting scheduling requests reaches a preset maximum number of times, when a timing duration of the second timer has reached the preset timing duration, and the scheduling request procedure is unsuccessful, terminate the scheduling request procedure and trigger another procedure.

23. The uplink transmission device according to claim 20, wherein the another procedure comprises a random access procedure.

24. The uplink transmission device according to claim 14, wherein a dedicated message or a public message is used by a network side to transmit configuration information of the timer.

25. The uplink transmission device according to claim 24, wherein the configuration information of the timer is configured by the network side based on a type of random access or a type of event that triggers the random access.

26. The uplink transmission device according to claim 24, wherein the configuration information of the timer is configured by the network side based on configuration of different scheduling requests.

27. The uplink transmission device according to claim 14, wherein the uplink transmission device is integrated in a base station or a terminal.

28. A computer readable storage medium having computer instructions stored therein, wherein when the computer instructions are executed, the method of any one of claims 1 to 13 is performed.

29. A terminal comprising a memory and a processor, wherein the memory has computer instructions stored therein, and when the processor executes the computer instructions, the method of any one of claims 1 to 13 is performed.
